# EUROPEAN PATENT SPECIFICATION

(11) **EP 3 185 593 B1**
(45) Date of publication and mention of the grant of the patent: **27.05.2020**
(21) Application number: 16198447.1
(22) Date of filing: 11.11.2016
(51) Int. Cl.: H04W 76/50, H04W 4/90, H04W 76/10, H04W 4/02, H04W 4/20, H04W 64/00, H04L 29/06, H04W 12/08, H04W 80/10

(54) **SYSTEM AND METHOD FOR EMERGENCY SECURE USER PLANE LOCATION POSITIONING**
SYSTEM UND VERFAHREN ZUR SECURE-USER-PLANE-LOCATION-NOTFALLPOSITIONIERUNG
SYSTÈME ET PROCÉDÉ DE POSITIONNEMENT D'EMPLACEMENT DE PLAN D'UTILISATEUR SÉCURISÉ EN CAS D'URGENCE

(30) Priority: 22.12.2015 US 201514978285
(43) Date of publication of application: 28.06.2017
(73) Proprietor: Intel IP Corporation, Santa Clara, CA 95054 (US)
(72) Inventor: NATESAN, Murugan, 560066 Bangalore (IN)
(74) Representative: Lang, Johannes

(56) References cited:
- EP-A1- 2 894 882
- WO-A1-2008/074782
- US-A1- 2015 304 808
- V9 Anonymous: "IMS Profile for Voice and SMS, Version 9.0", GSM Association Non-confidential Official Document IR.92, 8 April 2015 (2015-04-08), pages 1-40, XP055364907, Retrieved from the Internet: URL:http://www.gsma.com/newsroom/wp-conten t/uploads/IR.92-v9.0.pdf [retrieved on 2017-04-13]
- "3rd Generation Partnership Project; Technical Specification Group Services and System Aspects; IP Multimedia Subsystem (IMS) emergency sessions (Release 13)", 3GPP STANDARD; 3GPP TS 23.167, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.1.0, 15 December 2015 (2015-12-15), pages 1-46, XP051046471, [retrieved on 2015-12-15]
- "3rd Generation Partnership Project; Technical Specification Group Services and System Aspects; Support for Internet Protocol (IP) based IP Multimedia Subsystem (IMS) Emergency calls over General Packet Radio Service (GPRS) and Evolved Packet Service (EPS) (Release 9)", 3GPP DRAFT; 23869-900, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725735, Retrieved from the Internet: URL:http://www.3gpp.org/ftp/tsg_sa/WG2_Arc h/Latest_SA2_Specs/Rel-9/ [retrieved on 2013-07-23]
- "Secure User Plane Location Architecture ; OMA-AD-SUPL-V3_0-20110920-C", OMA-AD-SUPL-V3_0-20110920-C, OPEN MOBILE ALLIANCE (OMA), 4330 LA JOLLA VILLAGE DR., SUITE 110 SAN DIEGO, CA 92122 ; USA , no. 3.0 20 September 2011 (2011-09-20), pages 1-43, XP064184174, Retrieved from the Internet: URL:ftp/Public_documents/LOC/Permanent_doc uments/ [retrieved on 2014-10-08]

## Description

### BACKGROUND

### Field

Aspects described herein generally relate to positioning for emergency wireless communications, including positioning using secure user plane location (SUPL) positioning.

### Related Art

The Global Positioning System (GPS) is a global navigation satellite systems (GNSS) that provides location and time information to receivers on Earth. Other countries have implemented or are planning to implement similar systems, including, for example, the Russian Global Navigation Satellite System (GLONASS), the European Union Galileo positioning system (GALILEO), the Japanese Quasi-Zenith Satellite System (QZSS), the Chinese BeiDou navigation system, and the Indian Regional Navigational Satellite System (IRNSS).

GNSS systems use radio signals transmitted by orbiting satellites to determine precise ground locations, enabling advanced navigation and location-based services. Typically, a GNSS receiver determines its position based on the timing of messages received from at least four GNSS satellites. Each message specifies the time of transmission and the position of the satellite at the time of transmission. The receiver can calculate its location using navigation equations by calculating the time of transit for each received. The location can then be, for example, displayed on an electronic map or provided to another application.

Using satellite signals to perform a location determination can be time consuming. For example, a GPS receiver often requires up to several minutes to compute an initial position. Accordingly, assisted GPS ("A-GPS") can be used to reduce the time-to-first-fix. The user equipment, such as a mobile phone, can obtain data from an A-GPS server using, for example, cellular or other wireless communication protocols. The data obtained can include orbital data for GPS satellites and can reduce the time required to lock onto signals and decode the data broadcast by the satellites. In some cases, the user equipment can provide partial information to an A-GPS server, which can then calculate the location for the user equipment. This has the added benefit of reducing the workload of the user equipment.

In operation, the location of the communication device (*e.g*., mobile device) can be provided to the supporting service provider in certain circumstances. Location reporting can use control plane positioning or user plane positioning. The location reporting process can include, for example, periodic location reporting by the operating system of the communication device, location reporting initiated by one or more applications running on the communication device, and/or location reporting by the communication device during an emergency call (*e.g.,* a call to 911).

US 2015/304808 A1 discloses a wireless multimode communication device which includes a plurality of modems. Each modem complies with a different radio access technology as e.g. CDMA and LTE. The communication device further includes several location engines adapted to different navigation systems as GPS and GLONASS. Location based services are provided transport-independent. First, a current radio access technology is determined and then used. A SUPL session is initiated with a network SUPL Location Platform.

EP 2 894 882 A1 discloses enhanced emergency 911 systems associating a location with the origin of an emergency call. The UE to provide emergency mobile originated location reports comprises a GNSS core: the UE detects the initiation of an emergency call and triggers a GNSS core to generate a location report. The GNSS core then transmits the location report from the UE to a remote location server.

WO 2008/074782 discloses emergency session establishment in an IMS (IP Multimedia Subsystem) environment. An emergency connection is established in the packet-switched domain.

### SUMMARY

The invention is set out in the appended set of claims.

Various

Various embodiments provide a modem for wireless communication of a communication device with one or more wireless communication networks.

The modern comprises: a secure user plane location, SUPL, socket configured to: establish a secure connection with a position assistance server; and provide a SUPL message to the position assistance server via the secure connection, characterized in that the modem further comprises an internet protocol multimedia subsystem, IMS, stack configured to establish an emergency packet data network, PDN, regardless of whether the communication device includes a valid Universal Integrated Circuit Card, UICC, or Subscriber identity module, SIM, card to authenticate the communication device on said one or more wireless networks, the emergency PDN being used to establish the secure connection with the position assistance server and to provide the SUPL message to the position assistance server. The modem mentioned in this paragraph provides a first example.

The SUPL socket may be further configured to: receive, from the position assistance server, an initialization message generated in response to establishment of the emergency PDN; and provide the received initialization message to a navigation core adapted to facilitate communications between the modem and an operating system of the communication device. The features mentioned in this paragraph in combination with the first example provide a second example. The SUPL socket may be configured to establish the secure connection based on the received initialization message. The features mentioned in this paragraph in combination with the second example provide a third example.

The SUPL socket may be further configured to: listen for the initialization message on a user datagram protocol, UDP, socket; and receive the received initialization message on the UDP socket. The features mentioned in this paragraph in combination with the second example provide a fourth example.

The SUPL socket may be further configured to: receive a connection request from the navigation core, the establishing of the secure connection being based on the connection request, wherein the connection request is based on the received initialization message provided to the navigation core. The features mentioned in this paragraph in combination with the second example provide a fifth example.

The SUPL socket may be configured to provide the received initialization message to the navigation core via one or more of the following: a mobile broadband interface model, MBIM, interface, a remote procedure calling interface, and a customer attention, c-at, command interface. The features mentioned in this paragraph in combination with the second example provide a sixth example.

The initialization message may be a SUPL initialization message. The features mentioned in this paragraph in combination with the second example provide a seventh example.

The SUPL socket may be further configured to: receive position assistance data from the position assistance server based on the SUPL message. The features mentioned in this paragraph in combination with the first example provide an eighth example.

The SUPL socket may be further configured to: provide the received position assistance data to the navigation core. The features mentioned in this paragraph in combination with the eighth example provide a ninth example.

The position assistance server may be a SUPL server that stores position assistance data. The features mentioned in this paragraph in combination with the first example provide a tenth example.

Various embodiments provide a communication device comprising the modem of the first example.

Various embodiments provide a method for wireless communication of a communication device with one or more wireless communication networks, the communication device including a navigation core and a modem, the navigation core for facilitating communications between the modem and an operating system of the communication device, the modem comprising a secure user plane location, SUPL, socket.

The method comprises: establishing by the SUPL socket, a secure connection with a position assistance server; providing by the SUPL socket, a SUPL message from the navigation core to the position assistance server via the secure connection, the method characterized by establishing an emergency packet data network, PDN, by an internet protocol multimedia subsystem, IMS, stack comprised in the modem regardless of whether the communication device includes a valid Universal Integrated Circuit Card, UICC, or Subscriber identity module, SIM, card to authenticate the communication device on said one or more wireless networks, the emergency PDN being used to establish the secure connection with the position assistance server and to provide the SUPL message to the position assistance server. The method mentioned in this paragraph provides an eleventh example. example.

In the following, further examples useful for understanding the invention are mentioned.

The method may further comprise: receiving, by the SUPL socket, an initialization message from the position assistance server; and providing, by the SUPL socket, the received initialization message to the navigation core. The features mentioned in this paragraph in combination with the eleventh example provide a twelfth example.

The initialization message may be provided to the navigation core via one or more of the following: a mobile broadband interface model, MBIM, interface, a remote procedure calling interface, and a customer attention, c-at, command interface. The features mentioned in this paragraph in combination with the eleventh example provide a thirteenth example.

The establishing of the secure connection with the position assistance server may be based on the received initialization message. The features mentioned in this paragraph in combination with the twelfth example provide a fourteenth example.

The method may further comprise: listening, by the SUPL socket, for the initialization message on a user datagram protocol, UDP, socket; and receiving, by the SUPL socket, the initialization message on the UDP socket. The features mentioned in this paragraph in combination with the twelfth example provide a fifteenth example.

The method may further comprise: receiving, by the SUPL socket, a connection request from the navigation core, wherein the establishing of the secure connection is based on the connection request, and wherein the connection request is based on the received initialization message provided to the navigation core. The features mentioned in this paragraph in combination with the twelfth example provide a sixteenth example.

The initialization message may be a SUPL initialization message. The features mentioned in this paragraph in combination with the twelfth example provide a seventeenth example.

The method may further comprise: receiving, by the SUPL socket, position assistance data from the position assistance server based on the SUPL message. The features mentioned in this paragraph in combination with the eleventh example provide an eighteenth example.

The method may further comprise: providing, by the SUPL socket, the received position assistance data to the navigation core. The features mentioned in this paragraph in combination with the eighteenth example provide a nineteenth example.

The SUPL message may be provided to the position assistance server using an emergency packet data network, PDN. The features mentioned in this paragraph in combination with the eleventh example provide a twentieth example.

Various embodiments provide a non-transitory computer-readable storage medium comprising instructions which, when executed by a computer, cause the computer to carry out the method of the eleventh example.

The SUPL socket may be configured to provide the received initialization message to the navigation core via one or more of the following: a mobile broadband interface model, MBIM, interface, a remote procedure calling interface, and a customer attention, c-at, command interface. The features mentioned in this paragraph in combination with any of the second example to the fifth example provide a twenty-first example.

The initialization message may be a SUPL initialization message. The features mentioned in this paragraph in combination with any of the second example to the fifth example and the twenty-first example provide a twenty-second example.

The SUPL socket may be further configured to: receive position assistance data from the position assistance server based on the SUPL message. The features mentioned in this paragraph in combination with any of the first example to the fifth example, the twenty-first example and the twenty-second example provide a twenty-third example.

The SUPL socket may be further configured to: provide the received position assistance data to the navigation core. The features mentioned in this paragraph in combination with the twenty-third example provide a twenty-fourth example.

The position assistance server may be a SUPL server that stores position assistance data. The features mentioned in this paragraph in combination with any of the first example to the fifth example and any of the twenty-first example to the twenty-fourth example provide a twenty-fifth example.

Various embodiments provide a communication device comprising the modem of any of the first example to the fifth example and the twenty-first example to the twenty-fifth example.

Various embodiments provide an apparatus comprising means to perform the method as described in any of the eleventh example to the twentieth example.

### BRIEF DESCRIPTION OF THE DRAWINGS/FIGURES

The accompanying drawings, which are incorporated herein and form a part of the specification, illustrate the aspects of the present disclosure and, together with the description, further serve to explain the principles of the aspects and to enable a person skilled in the pertinent art to make and use the aspects.
FIG. 1 illustrates a satellite positioning system according to exemplary aspects of the present disclosure.
FIG. 2A illustrate an assistance server according to exemplary aspects of the present disclosure.
FIG. 2B illustrate a communication device according to exemplary aspects of the present disclosure.
FIG. 3 illustrates a communication device according to an exemplary aspect of the present disclosure.

### DETAILED DESCRIPTION

In the following description, numerous specific details are set forth in order to provide a thorough understanding of the aspects of the present disclosure. However, it will be apparent to those skilled in the art that the aspects, including structures, systems, and methods, may be practiced without these specific details. The description and representation herein are the common means used by those experienced or skilled in the art to most effectively convey the substance of their work to others skilled in the art. In other instances, well-known methods, procedures, components, and circuitry have not been described in detail to avoid unnecessarily obscuring aspects of the disclosure.

### Exemplary Satellite System

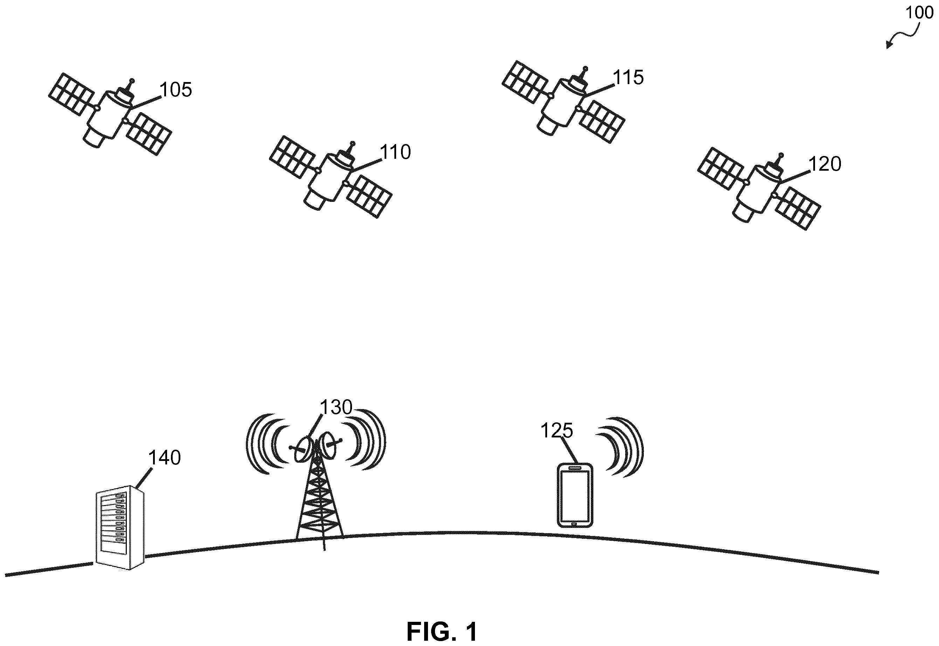

FIG. 1 illustrates an example satellite positioning system 100 according to an exemplary aspect of the present disclosure. The satellite positioning system 100 can include one or more user devices 125, one or more positioning satellites (*e.g*., positioning satellites 105, 110, 115, and 120), a wireless communication tower 130, and an Assisted GPS (A-GPS) server 140.

The user device 125 can include processor circuitry that is configured to determine its location in response to signals from one or more sources, such as positioning satellites 105, 110, 115, and/or 120. The user device 125 can be any electronic device that includes or interfaces with a GNSS receiver and that is configured to determine its location in response to signals from one or more sources as will be apparent to those skilled in the relevant arts without departing from the spirit and scope of the present disclosure. For example, the user device 125 can be a mobile communication device, such as a cellular telephone or smartphone. In some exemplary aspects, the user device 125 can be configured to determine its position with respect to any or all of latitude, longitude, and altitude. In other aspects, one or more other coordinate systems or positional representations can be used in addition to or in place of latitude, longitude, and/or altitude.

The positioning satellites 105, 110, 115, and 120 can be configured to conform with a single positioning system, such as Navstar GPS, Global Navigation Satellite System (GLONASS), and the GALILEO global navigation system. In other exemplary aspects, one or more of the positioning satellites can be associated with a different positioning system than one or more of the other satellites.

The user device 125 is configured to receive signals from positioning satellites (*e.g.,* 105, 110, 115, and/or 120) in the satellite positioning system 100 and to use received signals to determine the position of the user device 125. For example, the user device 125 can estimate its position using measurements of its range from a number of the positioning satellites, and to extract broadcast ephemeris data from the received signals. The ephemeris data can include navigational information of the positioning satellites, such as satellite orbit models, clock models, and/or information about the operational status of the positioning satellites. In operation, the navigational information can be utilized in determining, for example, a position fix and/or the velocity of the user device 125. Typically, the broadcast ephemeris is valid for a limited period of time (*e.g*., two to four hours from the time of broadcast). Before the end of the validity period, the user device 125 can obtain a fresh broadcast ephemeris to continue positional determinations. The range between the user device 125 and the transmitting positioning satellite can be measured based on the time it takes the message to travel from the positioning satellite to the user device 125.

The user device 125 (also referred herein as communication device 125) can be configured to communicate with one or more assistance servers (*e.g*., A-GPS server 140) utilizing one or more communication standards or protocols as would be understood by those of ordinary skill in the art. The communication device 125 can also be configured to communicate with one or more communication towers 130 to obtain information to assist in positional determinations. The communication tower 130 can be, for example, a cellular tower of a cellular network, a wireless local area network (WLAN) access point, etc.

The communication tower 130 can transmit assistance data from the assistance server 140 to the communication device 125. The assistance data can include, for example, the current time, the position of one or more satellites, clock offset data for the one or more satellites, and/or an estimate of the location of communication device 125 based on, for example, the location of one or more of the wireless communication towers 130. In some other implementations, the communication tower 130 can estimate the position of the communication device 125, either alone or in combination with one or more other communication towers 130 using, for example, signal strength observations or time-of-flight and/or angle-of-arrival calculations using signals transmitted by the communication device 125.

### Exemplary Assisted GPS Server

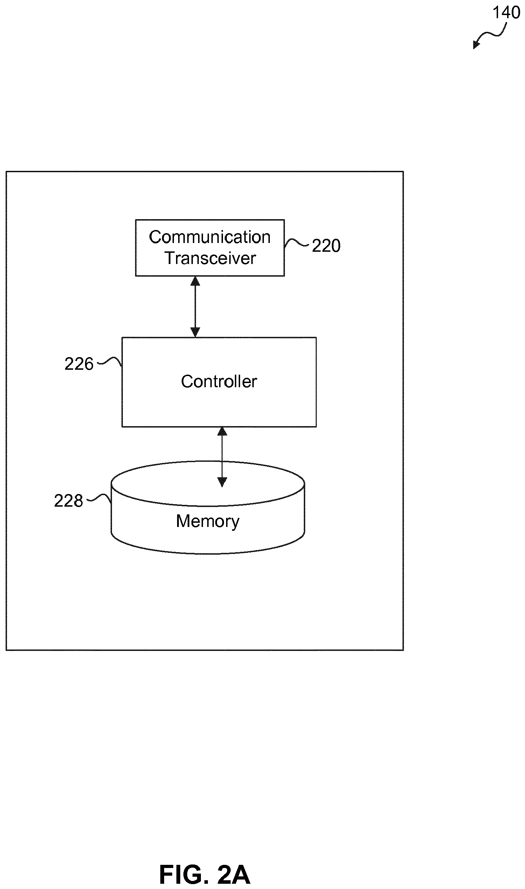

In an exemplary aspect, the communication device 125 can communicate with position assistance server 140 (also referred herein as A-GPS server 140) to reduce the time required to determine a position and/or to reduce the amount of processing required to be performed by the communication device 125. An exemplary aspect of the A-GPS server 140 is illustrated in FIG. 2A. The position assistance server 140 (A-GPS server 140) is not limited to the GPS technology, and it can be configured for one or more other GNSS technologies, including, for example, the GLONASS, GALILEO, QZSS, BeiDou navigation system, IRNSS, and/or one or more other satellite positioning technologies as would be understood by one of ordinary skill in the relevant arts. That is, the position assistance server 140 is referred to as the A-GPS server for the purpose of this discussion, but it is not limited thereto.

A-GPS server 140 can include memory 228 that stores information associated with positioning satellites (*e.g*., orbital information), which can be downloaded by the communication device 125. This information can be referred to as position assistance data. Further, the A-GPS server 140 can include a communication transceiver 220 configured to communicate with the communication device 125 via one or more communication protocols (*e.g*., WLAN, LTE, etc.). The communication transceiver 220 can include processor circuity configured to transmit and/or receive wireless communications via one or more communication protocols. The memory 228 can be any well-known volatile and/or non-volatile memory that stores data and/or instructions. The memory 208 can include, for example, read-only memory (ROM), random access memory (RAM), flash memory, a magnetic storage media, an optical disc, erasable programmable read only memory (EPROM), and programmable read only memory (PROM). The memory 208 can be non-removable, removable, or a combination of both. In an exemplary aspect, the memory 208 can also include processor circuitry.

The communication device 125 can use the information provided by the A-GPS server to reduce the time required to determine its location. For example, the communication device 125 can determine one or more satellite locations from the A-GPS data, instead of waiting to decode similar data received from satellites. The A-GPS data can assist signal processing algorithms by reducing the search time to obtain a satellite signal.

In some exemplary aspects, the communication device 125 can be configured to offload processing to the A-GPS server 140 by uploading information-such as, satellite signal time of arrival information, information on one or more received satellite signals, one or more coarse positions of the communication device 125, and/or other information as would be understood by those skilled in the arts-to the A-GPS server 140. The coarse position can be based on, for example, historical position data of the communication device 125 (*e.g.,* last known position), geographical information (*e.g.,* terrain information), and/or other information as would be understood by those skilled in the relevant arts.

The A-GPS server 140 can include a controller 226. The controller 226 can include processor circuitry that is configured to control the overall operation and/or configuration of the A-GPS server 140, generate a navigation solution, such as a position fix and/or velocity of the communication device 125, and provide the navigation solution to the communication device 125.

### Exemplary Communication Devices

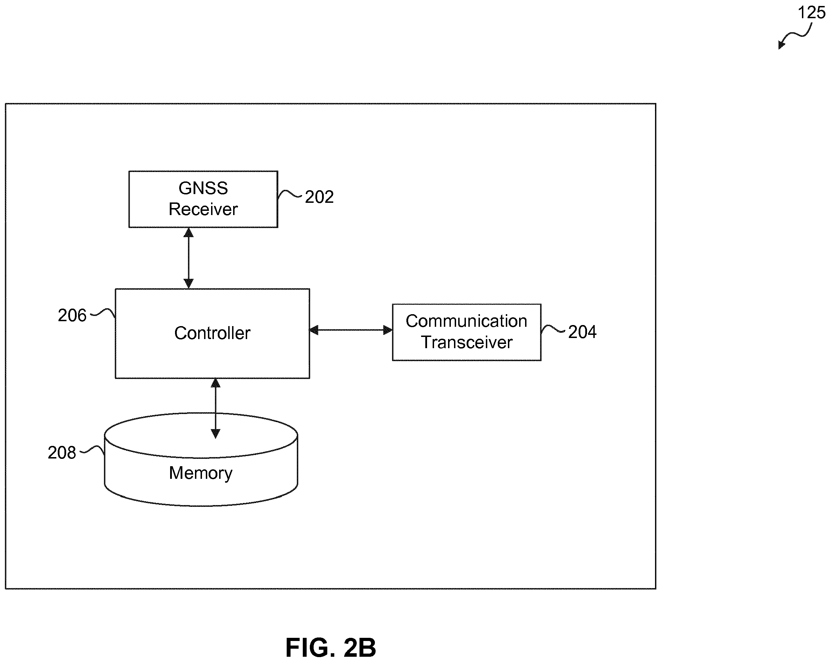

FIG. 2B illustrates a schematic diagram of an exemplary communication device 125 according to an exemplary aspect of the present disclosure. The communication device 125 can be a GNSS enabled communication device that is configured to determine its location in response to signals from one or more sources. For example, the communication device 125 can be configured to determine its position from GNSS signals received from one or more positioning satellites (*e.g.,* 105, 110, 115, and 120).

The communication device 125 can include a GNSS receiver 202, a communication transceiver 204, a controller 206, and a memory 208.

The GNSS receiver 202 can include processor circuitry that is configured to receive GNSS signals from one or more GNSS satellites. In an exemplary aspect, the processor circuitry of the GNSS receiver 202 includes one or more transceivers configured to communicate with one or more satellites.

The controller 206 can include processor circuitry that is configured to control overall operation and/or configuration of the communication device 125 and to process GNSS signals from the GNSS receiver 202 to calculate a navigation solution, such as a position fix and/or velocity of the communication device 125.

The communication transceiver 204 includes processor circuitry that is configured to transmit and/or receive radio signals over one or more communication protocols (*e.g*., via communication tower 130). The controller 206 can be configured to facilitate communication with one or more communication networks and/or with one or more external devices (*e.g*., server 140). Further, the controller 206 can be configured to process communication signals transmitted/received by the communication transceiver 204 via the communication tower 130 to calculate a navigation solution and/or to assist in the calculation of the navigation solution calculated using the GNSS signals.

The memory 208 can be any well-known volatile and/or non-volatile memory that stores data and/or instructions. The memory 208 can include, for example, read-only memory (ROM), random access memory (RAM), flash memory, a magnetic storage media, an optical disc, erasable programmable read only memory (EPROM), and programmable read only memory (PROM). The memory 208 can be non-removable, removable, or a combination of both. In an exemplary aspect, the memory 208 can also include processor circuitry.

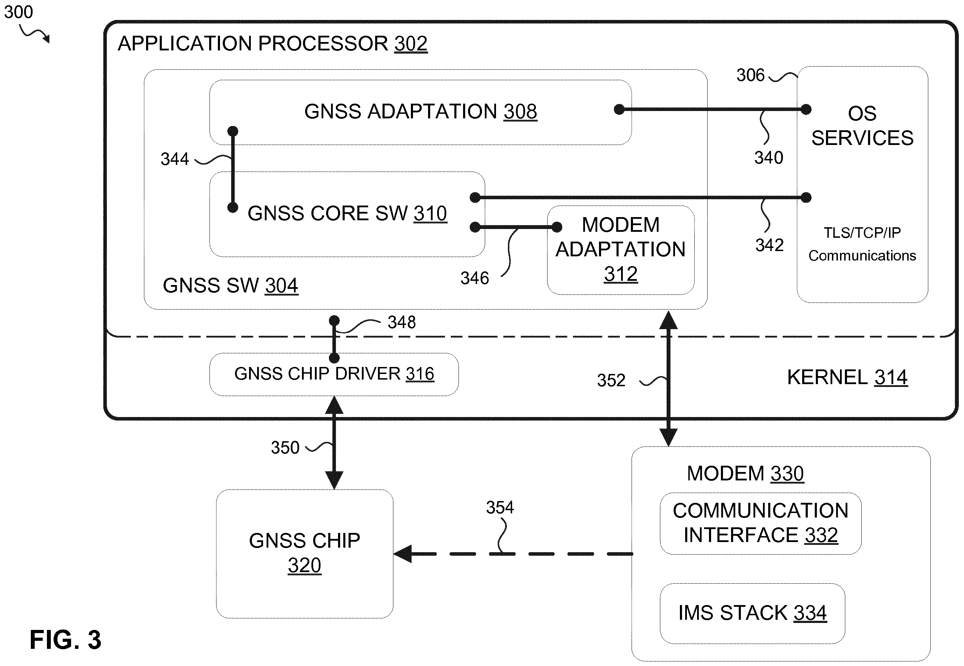

FIG. 3 illustrates a communication device 300 according to an exemplary aspect of the present disclosure. The communication device 300 can include an application processor 302, a GNSS chip 320 and a modem 330.

In one or more exemplary aspects, the communication device 300 is an example of the communication device 125. For example, in an exemplary aspect, the application processor 302 is a component of the controller 206, the GNSS chip 320 is a component of the GNSS receiver 202, and the modem 330 is a component of the communication transceiver 204.

The application processor 302 can include GNSS module 304, operation system (OS) services 306, and kernel 314. The kernel can include GNSS chip driver 316 configured to facilitate communications between the application processor 302 and the GNSS chip 320.

The GNSS module 304 can include GNSS adaptation module 308, GNSS core module 310, and modem adaptation module 312. The GNSS module 304 can include one or more computer programs and/or code configured to facilitate communications between the modem 330 and/or the GNSS chip 320 with the operating system of the communication device 300 and/or one or more applications running on the communication device 300. For example, the GNSS module 304 can be configured to interface with the modem 330 and/or the GNSS chip 320 to perform location reporting operations and/or location request operations, including requests for position assistance data from the SUPL server 140.

In an exemplary aspect, the GNSS core module 310 includes one or more computer programs and/or code configured to facilitate communications between the modem 330 and/or the GNSS chip 320 with the operating system of the communication device 300 and/or one or more applications running on the communication device 300. In an exemplary aspect, the GNSS core module 310 includes a secure user plane location (SUPL) positioning module that is configured to perform secure user plane communications with an assistance server, such as A-GPS server 140. In this example, the A-GPS server 140 can be a SUPL server 140 that stores position assistance information and is configured to establish one or more SUPL communication sessions with the communication device 300. In operation, the SUPL server 140 can communicate with the communication device 300 using SUPL signaling.

In an exemplary aspect, the GNSS adaptation 308 includes one or more computer programs and/or code configured to facilitate the communications between the GNSS core 310 and the OS services 306 via communication paths 340 and 344. The GNSS core module 310 can also communicate with the OS services 342 directly via the communication path 342. The modem adaptation module 312 includes one or more computer programs and/or code configured to facilitate the communications between the GNSS core 310 and the modem 330 via communication paths 346 and 352.

The OS services 306 can include one or more computer programs and/or code configured to establish secure connections with the SUPL server 140. For example, the OS services 306 can establish one or more bearers to facilitate communications between the application processor 302, namely the SUPL position module of the GNSS core module 310, and the SUPL server 140.

The GNSS chip driver 316 includes one or more computer programs and/or code configured to facilitate the communications between the application processor 302 and the GNSS chip 320 via communication paths 348 and 350. In an exemplary aspect, the GNSS chip 320 includes processor circuitry that is configured to receive GNSS signals from one or more GNSS satellites. The GNSS chip 320 can also receive position assistance information from the modem 330 via communication path 354. This information can be, for example, time information obtained by the modem from one or more wireless networks.

The modem 330 can include a communication interface module 332 and an internet protocol multimedia subsystem (IMS) stack 334.

The communication interface module 332 can be configured to facilitate communications between the modem 330 and the application processor 302 (*e.g.,* modem adaptation module 312) via communication path 352. The communication interface module 332 can use one or more communication protocols to communicate with the application processor 302, such as remote procedure calls (RPC), customer attention (cat) commands, mobile broadband interface model (MBIM) functions, and/or one or more other communication protocols as would be understood by one of ordinary skill in the relevant arts.

The IMS stack 334 is an architectural framework configured to establish one or more multimedia based sessions to deliver IP multimedia services between the communication device 300 and one or more other devices. For example, the IMS stack 334 can be configured to use Session Initiation Protocol (SIP) procedures to establish, manage and terminate sessions on one or more IP networks. In an exemplary aspect, the IMS stack 334 can establish the multimedia based sessions using the Long-term Evolution (LTE) protocol, but is not limited thereto.

In an exemplary aspect, the IMS stack 334 can be configured to facilitate communications with the SUPL server 140, including activating one or more packet data networks (PDN). For example, the IMS stack 334 can activate an emergency PDN in response to an emergency call (*e.g.,* a call to 911) being performed. In an exemplary aspect, the emergency call is a Voice over LTE (VoLTE) emergency call, and the IMS stack 334 can activate the emergency PDN in response to the Voice over LTE (VoLTE) emergency call.

In operation, the communication device 300 will use a dedicated emergency PDN activated by the IMS stack 334 to perform the emergency call regardless of whether the communication device 300 includes a valid Universal Integrated Circuit Card (UICC) or Subscriber identity module (SIM) card to authenticate the communication device 300 on one or more wireless networks. That is, the communication device 300 will be able to make an emergency call even if the communication device cannot be authenticated on the available wireless communication network(s).

However, the emergency PDN is typically not made available to the application processor 302, namely the OS services 306, and is made available only to the modem 330. In this case, where the communication device 300 does not include a UICC or SIM card to authenticate with a wireless network, the OS services 306 will be unable to establish communications with the SUPL server 140 to obtain position assistance information using one or more SUPL communication sessions.

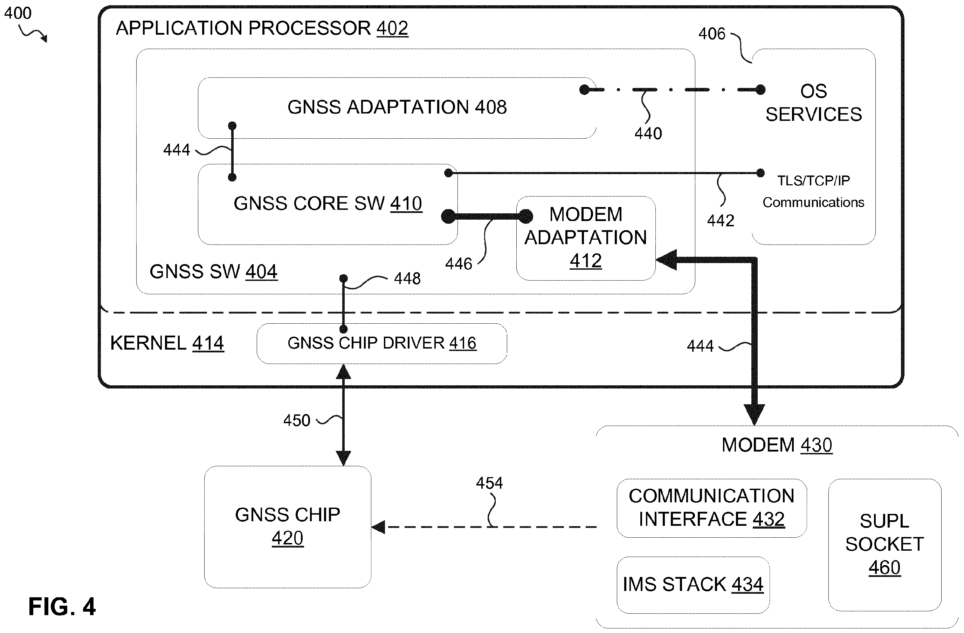

FIG. 4 illustrates a communication device 400 according to an exemplary aspect of the present disclosure. The communication device 400 can include an application processor 402, a GNSS chip 420 and a modem 430.

In one or more exemplary aspects, the communication device 400 is an example of the communication device 125. For example, in an exemplary aspect, the application processor 402 is a component of the controller 206, the GNSS chip 420 is a component of the GNSS receiver 202, and the modem 430 is a component of the communication transceiver 204.

The application processor 402 can include GNSS module 404, operation system (OS) services 406, and kernel 414. The kernel can include GNSS chip driver 416 configured to facilitate communications between the application processor 402 and the GNSS chip 420.

The GNSS module 404 can include GNSS adaptation module 408, GNSS core module 410, and modem adaptation module 412. The GNSS module 404 can include one or more computer programs and/or code configured to facilitate communications between the modem 430 and/or the GNSS chip 420 with the operating system of the communication device 400 and/or one or more applications running on the communication device 400. For example, the GNSS module 404 can be configured to interface with the modem 430 and/or the GNSS chip 420 to perform location reporting operations and/or location request operations, including requests for position assistance data from the SUPL server 140.

In an exemplary aspect, the GNSS core module 410 includes one or more computer programs and/or code configured to facilitate communications between the modem 430 and/or the GNSS chip 420 with the operating system of the communication device 400 and/or one or more applications running on the communication device 400. In an exemplary aspect, the GNSS core module 410 can include a secure user plane location (SUPL) positioning module similar to the GNSS core module 310. The SUPL position module can be configured to perform secure user plane communications with the SUPL server 140.

In an exemplary aspect, the GNSS adaptation 408 includes one or more computer programs and/or code configured to facilitate the communications between the GNSS core 410 and the OS services 406 via communication paths 440 and 444. The GNSS core module 410 can also communicate with the OS services 442 directly via the communication path 442. The modem adaptation module 412 includes one or more computer programs and/or code configured to facilitate the communications between the GNSS core 410 and the modem 430 via communication paths 446 and 452.

The OS services 406 can include one or more computer programs and/or code configured to establish secure connections with the SUPL server 140. For example, the OS services 406 can establish one or more bearers to facilitate communications between the application processor 402, namely the SUPL position module of the GNSS core module 410, and the SUPL server 140.

The GNSS chip driver 416 includes one or more computer programs and/or code configured to facilitate the communications between the application processor 402 and the GNSS chip 420 via communication paths 448 and 450. In an exemplary aspect, the GNSS chip 420 includes processor circuitry that is configured to receive GNSS signals from one or more GNSS satellites. The GNSS chip 420 can also receive position assistance information from the modem 430 via communication path 454. This information can be, for example, time information obtained by the modem from one or more wireless networks.

In an exemplary aspect, the modem 430 includes a communication interface module 432, IMS stack 434, and SUPL socket 460. As explained in detail below, the modem 430 is similar to the modem 330 but includes SUPL socket 460 that enables the establishment of SUPL communication sessions with the SUPL server 140.

The communication interface module 432 can be configured to facilitate communications between the modem 430 and the application processor 402 (*e.g.,* modem adaptation module 412) via communication path 452. The communication interface module 432 can use one or more communication protocols to communicate with the application processor 402, such as remote procedure calls (RPC), customer attention (cat) commands, mobile broadband interface model (MBIM) functions, and/or one or more other communication protocols as would be understood by one of ordinary skill in the relevant arts.

The IMS stack 434 is an architectural framework configured to establish one or more multimedia based sessions to deliver IP multimedia services between the communication device 400 and one or more other devices. For example, the IMS stack 434 can be configured to use Session Initiation Protocol (SIP) procedures to establish, manage and terminate sessions on one or more IP networks. The IMS stack 434 can be configured to facilitate communications with the SUPL server 140, including activating one or more packet data networks (PDN). For example, the IMS stack 434 can activate an emergency PDN in response to an emergency call (*e.g.,* a call to 911) being performed. In an exemplary aspect, the IMS stack 434 can establish the multimedia based sessions using the Long-term Evolution (LTE) protocol, but is not limited thereto.

In an exemplary aspect, the SUPL socket 460 includes one or more computer programs and/or code configured to listen for SUPL initialization messages generated by the SUPL server 140. For example, the SUPL socket 460 can be configured to listen on a user datagram protocol (UDP) socket for incoming SUPL initialization messages from the SUPL server 140. The SUPL socket 460 can also be configured to facilitate the exchange of communications with the SUPL server 140. For example, the SUPL socket 460 can perform a SUPL message exchange with the SUPL server 140 using one or more secure connections, such as connections secured using the transport layer security (TLS) protocol.

During an emergency call, communication device 400 will use a dedicated emergency PDN activated by the IMS stack 434 for SUPL message communications with the SUPL server 140. This emergency PDN will be available to the communication device 400 regardless of whether the communication device 400 includes a UICC/SIM card to authenticate the communication device 400 on one or more wireless networks.

As discussed above, the emergency PDN is not typically not made available to the application processor 402, namely the OS services 406, and is made available only to the modem 430.

In exemplary aspects, because the SUPL socket 460 is included within the modem 430, the SUPL socket 460 will have access to the emergency PDN activated by the IMS stack 434. In operation, the SUPL socket 430 can establish communications with the SUPL server 140 using the emergency PDN to obtain position assistance data using one or more SUPL communication sessions. In this example, the communication device 400 will be able to communicate with the SUPL server 140 even if the communication device 400 does not include a UICC or SIM card to authenticate with a wireless network. In this regards, the communication device 400 will be operable to obtain position assistance data from the SUPL server 140 during an emergency call even if the communication device 400 is unable to be authenticated on a wireless communication network (*i.e*., the communication device 400 does not include a valid UICC/SIM).

In operation, the GNSS core module 410 can obtain position assistance data from the SUPL server 140 via the SUPL socket 460. For example, the GNSS core module 410 can communicate with the modem 430 via the modem adaptation 412 and communication paths 444 and 446. This operation is illustrated in FIG. 4 by the heavier weighted communication paths 444 and 446. Further, the communication path 440 is illustrated in partially broken line to emphasize that the SUPL communication session is not established through the OS services 406 (as described above with reference to FIG. 3).

### Exemplary Communication Method

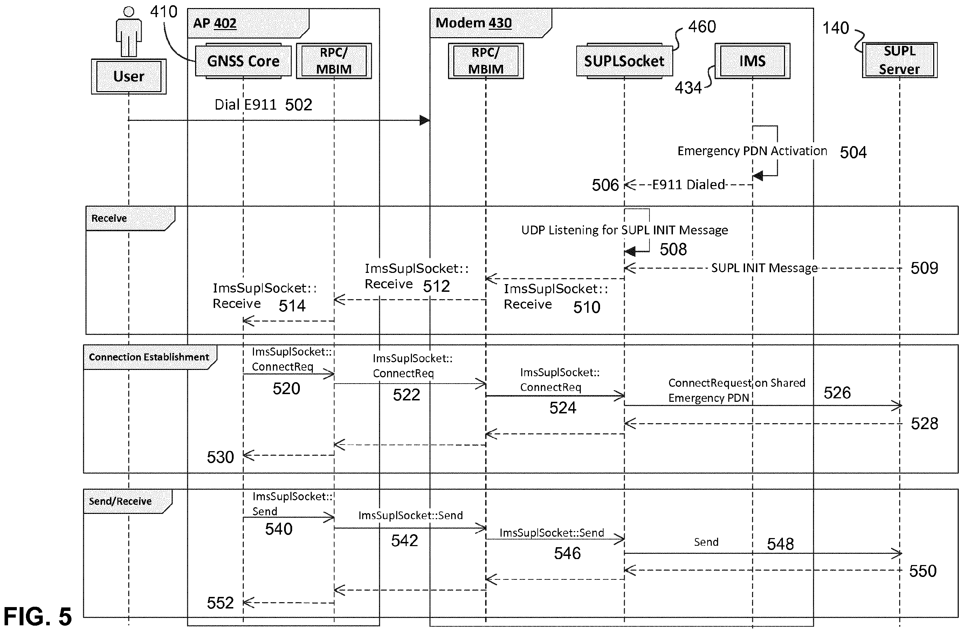

FIG. 5 illustrates a communication method 500 according to an exemplary aspect of the present disclosure. The flowchart is described with continued reference to FIGS. 1-4. The steps of the method are not limited to the order described below, and the various steps may be performed in a different order. Further, two or more steps of the method may be performed simultaneously with each other.

The method of flowchart 500 begins at step 502 where the modem (*e.g*., modem 430) receives a notice that an emergency call has been initiated, for example, by a user of the communication device. In operation, the notice of the emergency call can be provided to the modem 430 by the application processor 402.

After step 502, the flowchart 500 transitions to step 504, where an emergency packet data network (PDN) is activated in response to the initiation of the emergency call. In an exemplary aspect, the emergency PDN can be activated by the IMS stack 434. In some cases, the IMS stack 434 and the wireless network can cooperatively activate the emergency PDN.

After step 504, the flowchart 500 transitions to step 506, where the SUPL socket 460 receives a message from the IMS stack 434 indicating that an emergency call has been initiated and the emergency PDN has been activated.

After step 506, the flowchart 500 transitions to step 508, where the SUPL socket 460 listens for SUPL initialization (SUPL INIT) messages generated by the SUPL server 140. For example, the SUPL socket 460 can begin listening in response to the emergency PDN being activated. In an exemplary aspect, the SUPL socket 460 can be configured to listen on a user datagram protocol (UDP) socket for incoming SUPL initialization messages from the SUPL server 140.

After step 508, the flowchart 500 transitions to step 509, where the SUPL socket 460 receives a SUPL initialization (SUPL INIT) message from the SUPL server 140. The SUPL initialization message can be generated and provided by the SUPL server 140 in response to the dialing of an emergency number (*e.g.,* 911) by the user. In an exemplary aspect, the SUPL initialization message can be generated and provided by the SUPL server 140 in response to the activation of emergency PDN by the IMS stack 434, which can be activated in response to the dialing of the emergency number.

After step 509, the flowchart 500 transitions to steps 510-514, where the SUPL socket 460 provides the SUPL INIT message to the application processor 402. In an exemplary embodiment, the SUPL INIT message is provided to the GNSS core module 410 (step 514). The SUPL INIT message can be sent from the SUPL socket 460 using one or more communication protocols, including, remote procedure calls (RPC), customer attention (c-at) commands, mobile broadband interface model (MBIM) functions, and/or one or more other communication protocols as would be understood by one of ordinary skill in the relevant arts.

After step 514, the flowchart 500 transitions to steps 520-524, where the SUPL socket 460 is requested to establish a secure connection with the SUPL server 140. For example, the GNSS core module 410 can generate a connection request message (ConnectReq) and provide the connection request message to the SUPL socket 460 to request that the SUPL socket 460 establish the connection with the SUPL server 140. The connection request message can be sent from the GNSS core module 410 using one or more communication protocols, including, remote procedure calls (RPC), customer attention (c-at) commands, mobile broadband interface model (MBIM) functions, and/or one or more other communication protocols as would be understood by one of ordinary skill in the relevant arts.

After step 524, the flowchart 500 transitions to step 526, where the SUPL socket 460 requests to establish a connection with the SUPL server 140 in response to receiving the connection request message from the GNSS core module 410. For example, the SUPL socket 460 can pass the connection request message received from the GNSS core module 410 to the SUPL server 140. Alternatively, the SUPL socket 460 can generate a connection request based on the received connection request message and provide the connection request to the SUPL server 140. In an exemplary aspect, the SUPL socket 460 can use one or more secure connections when providing the connection request message/connection request to the SUPL server 140. For example, the connection can be secured using the transport layer security (TLS) protocol.

After step 526, the flowchart 500 transitions to step 528, where the SUPL socket 460 receives an acknowledgement message from the SUPL server 140 in response to the SUPL server 140 successfully receiving the connection request message/connection request. The acknowledgment message can be passed to the GNSS core module 410 (step 530). In an exemplary aspect, the acknowledgement message acknowledges that a connection has been established with the SUPL server 140.

After step 530, the flowchart 500 transitions to steps 540-550, where a SUPL message exchange is performed. At step 540, the GNSS core module 410 can generate a request message and provide the request message to the SUPL socket 460 (steps 540-546) to request position assistance data from the SUPL server 140.

In an exemplary aspect, the GNSS core module 410 can communicate with the SUPL socket 460 of the modem 430 via the modem adaptation 412 and communication paths 444 and 446. The SUPL socket 460 can then request position assistance data from the SUPL server 140 (step 548). In an exemplary aspect, the request for position assistance data can be communicated to the SUPL server 140 using the emergency PDN established by the IMS stack 434.

At step 550, the SUPL server 140 can provide position assistance data to the SUPL socket 460. In an exemplary aspect, the position assistance data can be communicated to the SUPL socket 460 using the emergency PDN established by the IMS stack 434.

The SUPL socket 460 can then provide the position assistance data to the GNSS core module 410 (step 552). The position assistance data can be passed from the SUPL socket 460 to the GNSS core module 410 via the modem adaptation 412 and communication paths 444 and 446.

### Conclusion

The aforementioned description of the specific aspects will so fully reveal the general nature of the disclosure that others can, by applying knowledge within the skill of the art, readily modify and/or adapt for various applications such specific aspects, without undue experimentation, and without departing from the general concept of the present disclosure. Therefore, such adaptations and modifications are intended to be within the meaning and range of equivalents of the disclosed aspects, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

References in the specification to "one aspect," "an aspect," "an exemplary aspect," etc., indicate that the aspect described may include a particular feature, structure, or characteristic, but every aspect may not necessarily include the particular feature, structure, or characteristic. Moreover, such phrases are not necessarily referring to the same aspect. Further, when a particular feature, structure, or characteristic is described in connection with an aspect, it is submitted that it is within the knowledge of one skilled in the art to affect such feature, structure, or characteristic in connection with other aspects whether or not explicitly described.

The exemplary aspects described herein are provided for illustrative purposes, and are not limiting. Other exemplary aspects are possible, and modifications may be made to the exemplary aspects. Therefore, the specification is not meant to limit the disclosure. Rather, the scope of the disclosure is defined only in accordance with the following claims and their equivalents.

Aspects may be implemented in hardware (*e.g*., circuits), firmware, software, or any combination thereof. Aspects may also be implemented as instructions stored on a machine-readable medium, which may be read and executed by one or more processors. A machine-readable medium may include any mechanism for storing or transmitting information in a form readable by a machine (*e.g*., a computing device). For example, a machine-readable medium may include read only memory (ROM); random access memory (RAM); magnetic disk storage media; optical storage media; flash memory devices; electrical, optical, acoustical or other forms of propagated signals (*e.g*., carrier waves, infrared signals, digital signals, etc.), and others. Further, firmware, software, routines, instructions may be described herein as performing certain actions. However, it should be appreciated that such descriptions are merely for convenience and that such actions in fact results from computing devices, processors, controllers, or other devices executing the firmware, software, routines, instructions, etc. Further, any of the implementation variations may be carried out by a general purpose computer.

For the purposes of this discussion, the term "processor circuitry" shall be understood to be circuit(s), processor(s), logic, or a combination thereof. For example, a circuit can include an analog circuit, a digital circuit, state machine logic, other structural electronic hardware, or a combination thereof. A processor can include a microprocessor, a digital signal processor (DSP), or other hardware processor. The processor can be "hard-coded" with instructions to perform corresponding function(s) according to aspects described herein. Alternatively, the processor can access an internal and/or external memory to retrieve instructions stored in the memory, which when executed by the processor, perform the corresponding function(s) associated with the processor, and/or one or more functions and/or operations related to the operation of a component having the processor included therein.

In one or more of the exemplary aspects described herein, processor circuitry can include memory that stores data and/or instructions. The memory can be any well-known volatile and/or non-volatile memory, including, for example, read-only memory (ROM), random access memory (RAM), flash memory, a magnetic storage media, an optical disc, erasable programmable read only memory (EPROM), and programmable read only memory (PROM). The memory can be non-removable, removable, or a combination of both.

Examples of user devices, communication devices, user equipment, and/or mobile devices can include (but are not limited to) a mobile computing device-such as a laptop computer, a tablet computer, a mobile telephone or smartphone, a "phablet," a personal digital assistant (PDA), navigation device (*e.g.,* GPS receiver) and the like; and a wearable computing device-such as a computerized wrist watch or "smart" watch, computerized eyeglasses, and the like. In some aspects, the user/mobile device may be a stationary, including, for example, a stationary computing device-such as a personal computer (PC), a desktop computer, a computerized kiosk, an automotive/aeronautical/maritime in-dash computer terminal, automotive/aeronautical/maritime in-dash navigation systems, etc.

As will be apparent to a person of ordinary skill in the art based on the teachings herein, exemplary aspects are not limited to wireless communications conforming to Long-Term Evolution (LTE) protocols. For example, one or more of the exemplary aspects described herein can be implemented using one or more wireless communications conforming to one or more other communication standards/protocols, including (but not limited to), Evolved High-Speed Packet Access (HSPA+), Wideband Code Division Multiple Access (W-CDMA), CDMA2000, Time Division-Synchronous Code Division Multiple Access (TD-SCDMA), Global System for Mobile Communications (GSM), General Packet Radio Service (GPRS), Enhanced Data Rates for GSM Evolution (EDGE), and/or Worldwide Interoperability for Microwave Access (WiMAX) (IEEE 802.16), to one or more non-cellular communication standards, including (but not limited to) WLAN (IEEE 802.11), Bluetooth, Near-field Communication (NFC) (ISO/IEC 18092), ZigBee (IEEE 802.15.4), and/or Radio-frequency identification (RFID).

## Claims

1. A modem (430) for wireless communication of a communication device (125) with one or more wireless communication networks, the modem comprising:
a secure user plane location, SUPL, socket (460) configured to:
establish (526) a secure connection with a position assistance server (140); and
provide (548) a SUPL message to the position assistance server (140) via the secure connection, **characterized in that** the modem further comprises an internet protocol multimedia subsystem, IMS, stack (434) configured to establish an emergency packet data network, PDN, regardless of whether the communication device (125) includes a valid Universal Integrated Circuit Card, UICC, or Subscriber identity module, SIM, card to authenticate the communication device (125) on said one or more wireless networks, the emergency PDN being used to establish the secure connection with the position assistance server (140) and to provide the SUPL message to the position assistance server (140).

2. The modem (430) of claim 1, wherein the SUPL socket (460) is further configured to:
receive (509), from the position assistance server (140), an SUPL initialization message generated in response to establishment of the emergency PDN; and
provide (514) the received initialization message to a navigation core (410) adapted to facilitate communications between the modem and an operating system of the communication device.

3. The modem (430) of claim 2, wherein the SUPL socket (460) is configured to establish the secure connection based on the received initialization message.

4. The modem (430) of claim 2, wherein the SUPL socket (460) is further configured to:
listen (508) for the initialization message on a user datagram protocol, UDP, socket; and
receive (509) the received initialization message on the UDP socket.

5. The modem (430) of claim 2, wherein the SUPL socket (460) is further configured to:
receive (520-524) a connection request from the navigation core (410), the establishing of the secure connection being based on the connection request, wherein the connection request is based on the received initialization message provided to the navigation core (410).

6. The modem (430) of any of claims claim 2-5, wherein the SUPL socket (460) is configured to provide (514) the received initialization message to the navigation core (410) via one or more of the following: a mobile broadband interface model, MBIM, interface, a remote procedure calling interface, and a customer attention (c-at) command interface.

7. The modem (430) of any of claims 2-6, wherein the initialization message is a SUPL initialization message.

8. The modem (430) of any of claims 1-7, wherein the SUPL socket (460) is further configured to:
receive position assistance data from the position assistance server (140) based on the SUPL message.

9. The modem (430) of claim 8, wherein the SUPL socket (460) is further configured to: provide (552) the received position assistance data to the navigation core (410).

10. The modem (430) of any of claims 1-9, wherein the position assistance server (140) is a SUPL server that stores position assistance data.

11. A method for wireless communication of a communication device (125) with one or more wireless communication networks, the communication device (125) including a navigation core (410) and a modem (430), the navigation core (410) for facilitating itate communications between the modem and an operating system of the communication device, the modem (430) comprising a secure user plane location, SUPL, socket (460), the method comprising:
establishing, by the SUPL socket (460), a secure connection with a position assistance server (140);
providing, by the SUPL socket (460), a SUPL message from the navigation core (410) to the position assistance server (140) via the secure connection, the method **characterized by**
establishing an emergency packet data network, PDN, by an internet protocol multimedia subsystem, IMS, stack (334, 434) comprised in the modem (430), regardless of whether the communication device (125) includes a valid Universal Integrated Circuit Card, UICC, or Subscriber identity module, SIM, card to authenticate the communication device (125) on said one or more wireless networks, the emergency PDN being used to establish the secure connection with the position assistance server and to provide the SUPL message to the position assistance server (140).

12. The communication method of claim 11, further comprising:
receiving, by the SUPL socket (460), position assistance data from the position assistance server (140) based on the SUPL message.

13. The communication method of claim 12, further comprising:
providing, by the SUPL socket (460), the received position assistance data to the navigation core (410).

14. A non-transitory computer-readable storage medium comprising instructions which, when executed by a computer, cause the computer to carry out the method of any of claims 11-13.

## Patentansprüche

1. Modem (430) für drahtlose Kommunikation von einer Kommunikationsvorrichtung (125) mit einem oder mehreren drahtlosen Kommunikationsnetzwerken, das Modem umfassend:
einen sicheren-Benutzerebenenstandort-, SUPL-, Sockel (460), der konfiguriert ist zum:
Herstellen (526) einer sicheren Verbindung mit einem Positionsassistenzserver (140); und
Bereitstellen (548) einer SUPL Nachricht an den Positionsassistenzserver (140) mittels der sicheren Verbindung,
**gekennzeichnet dadurch, dass** das Modem ferner einen Internetprotokoll-Multimedia-Subsystem-, IMS-, Stapelspeicher (434) umfasst, der konfiguriert ist zum Herstellen eines Notfall-Paketdatennetzwerks, PDN, unabhängig davon ob die Kommunikationsvorrichtung (125) eine gültige Universal Integrated Circuit Card, UICC, oder Subscriber Identity Module, SIM, Karte zum authentifizieren der Kommunikationsvorrichtung (125) auf dem einem oder den mehreren drahtlosen Netzwerken beinhaltet,
wobei das Notfall PDN verwendet wird zum Herstellen der sicheren Verbindung mit dem Positionsassistenzserver (140) und zum Bereitstellen der SUPL Nachricht für den Positionsassistenzserver (140).

2. Modem (430) nach Anspruch 1, wobei der SUPL Sockel (460) ferner konfiguriert ist zum:
Empfangen (509), von dem Positionsassistenzserver (140), einer SUPL Initialisierungsnachricht, die als Reaktion auf Herstellen des Notfall PDN erzeugt wird; und
Bereitstellen (514) der empfangenen Initialisierungsnachricht an einen Navigationskern (410), der eingerichtet ist zum Erleichtern von Kommunikationen zwischen dem Modem und einem Betriebssystem der Kommunikationsvorrichtung.

3. Modem (430) nach Anspruch 2 wobei der SUPL Sockel (460) konfiguriert ist zum Herstellen der sicheren Verbindung basierend auf der empfangenen Initialisierungsnachricht.

4. Modem (430) nach Anspruch 2, wobei der SUPL Sockel (460) ferner konfiguriert ist zum:
Abhören (508) nach der Initialisierungsnachricht auf einem User-Datagram-Protocol-, UDP-, Sockel; und
Empfangen (509) der empfangenen Initialisierungsnachricht auf dem UDP Sockel.

5. Modem (430) nach Anspruch 2, wobei der SUPL Sockel (460) ferner konfiguriert ist zum:
Empfangen (520 - 524) einer Verbindungsanfrage von dem Navigationskern (410), wobei das Herstellen der sicheren Verbindung auf der Verbindungsanfrage basiert, wobei die Verbindungsanfrage auf der empfangenen Initialisierungsnachricht basiert, die für den Navigationskern (410) bereitgestellt wird.

6. Modem (430) nach einem der Ansprüche 2 - 5, wobei der SUPL Sockel (460) ferner konfiguriert ist zum Bereitstellen (514) der empfangenen Initialisierungsnachricht an den Navigationskern (410) mittels einem oder mehreren der folgenden: einer mobilen Breitbandschnittstellenmodel-, MBIM-, Schnitstelle, einer Remote-Prozedur-Aufruf-Schnittstelle, und einer Kundenaufmerksamkeits- (c-at) Befehlsschnittstelle.

7. Modem (430) nach einem der Ansprüche 2 - 6, wobei die Initialisierungsnachricht eine SUPL Initialisierungsnachricht ist.

8. Modem (430) nach einem der Ansprüche 1 - 7, wobei der SUPL Sockel (460) ferner konfiguriert ist zum:
Empfangen von Positionsassistenzdaten von dem Positionsassistenzserver (140) basierend auf der SUPL Nachricht.

9. Modem (430) nach Anspruch 8, wobei der SUPL Sockel (460) ferner konfiguriert ist zum:
Bereitstellen (552) der empfangenen Positionsassistenzdaten an den Navigationskern (410).

10. Modem (430) nach einem der Ansprüche 1 - 9, wobei der Positionsassistenzserver (140) ein SUPL Server ist, der Positionsassistenzdaten speichert.

11. Verfahren für drahtlose Kommunikation von einer Kommunikationsvorrichtung (125) mit einem oder mehreren Kommunikationsnetzwerken, wobei die Kommunikationsvorrichtung (125) einen Navigationskern (410) und ein Modem (430) beinhaltet, wobei der Navigationskern (410) zum Erleichtern von Kommunikationen zwischen dem Modem und einem Betriebssystem der Kommunikationsvorrichtung dient, wobei das Modem (430) einen sicheren-Benutzerebenenstandort-, SUPL-, Sockel (460) umfasst, das Verfahren umfassend:
Herstellen, durch den SUPL Sockel (460), einer sicheren Verbindung mit einem Positionsassistenzserver (140);
Bereitstellen, durch den SUPL Sockel (460), einer SUPL Nachricht von dem Navigationskern (410) an den Positionsassistenzserver (140) mittels der sicheren Verbindung,
**gekennzeichnet durch** Herstellen eines Notfall-Paketdatennetzwerks, PDN, durch einen Internetprotokoll-Multimedia-Subsystem-, IMS-, Stapelspeicher (334, 434), der in dem Modem (430) umfasst ist, unabhängig davon ob die Kommunikationsvorrichtung (125) eine gültige Universal Integrated Circuit Card, UICC, oder Subscriber Identity Module, SIM, Karte zum authentifizieren der Kommunikationsvorrichtung (125) auf dem einem oder den mehreren drahtlosen Netzwerken beinhaltet,
wobei das Notfall PDN verwendet wird zum Herstellen der sicheren Verbindung mit dem Positionsassistenzserver und zum Bereitstellen der SUPL Nachricht an den Positionsassistenzserver (140).

12. Kommunikationsverfahren nach Anspruch 11, ferner umfassend:
Empfangen, durch den SUPL Sockel (460), von Positionsassistenzdaten von dem Positionsassistenzserver (140) basierend auf der SUPL Nachricht.

13. Kommunikationsverfahren nach Anspruch 12, ferner umfassend:
Bereitstellen, durch den SUPL Sockel (460), der empfangenen Positionsassistenzdaten an den Navigationskern (410).

14. Nicht-flüchtiges computerlesbares Speichermedium umfassend Anweisungen die, wenn sie durch einen Computer ausgeführt werden, den Computer veranlassen, das Verfahren nach einem der Ansprüche 11 - 13 durchzuführen.

## Revendications

1. Un modem (430) pour une communication sans fil d'un dispositif de communication (125) avec un ou plusieurs réseaux de communication sans fil, le modem comprenant :
une socket de localisation de plan utilisateur sécurisée, SUPL, (460) configurée pour :
établir (526) une connexion sécurisée avec un serveur d'assistance de position (140) ; et
fournir (548) un message SUPL au serveur d'assistance de position (140) via la connexion sécurisée, **caractérisé en ce que** le modem comprend en outre une pile de sous-système multimédia en protocole Internet, IMS, (434) configurée pour établir un réseau de données par paquets, PDN, d'urgence, indépendamment du point de savoir si le dispositif de communication (125) inclut ou non une carte à circuit intégré universelle, UICC, valide ou une carte de module d'identité d'abonné, SIM, pour authentifier le dispositif de communication (125) sur lesdits un ou plusieurs réseaux sans fil, le PDN d'urgence étant utilisé pour établir la connexion sécurisée avec le serveur d'assistance de position (140) et pour fournir le message SUPL au serveur d'assistance de position (140).

2. Le modem (430) selon la revendication 1, dans lequel la socket SUPL (460) est en outre configurée pour :
recevoir (509), en provenance du serveur d'assistance de position (140), un message d'initialisation SUPL généré en réponse à l'établissement du PDN d'urgence ; et
fournir (514) le message d'initialisation reçu à un cœur de navigation (410) adapté pour faciliter des communications entre le modem et un système d'exploitation du dispositif de communication.

3. Le modem (430) selon la revendication 2, dans lequel la socket SUPL (460) est configurée pour établir la connexion sécurisée sur la base du message d'initialisation reçu.

4. Le modem (430) selon la revendication 2, dans lequel la socket SUPL (460) est en outre configurée pour :
guetter (508) le message d'initialisation sur une socket de protocole de datagramme utilisateur, UDP ; et
recevoir (509) le message d'initialisation reçu sur la socket UDP.

5. Le modem (430) selon la revendication 2, dans lequel la socket SUPL (460) est en outre configurée pour :
recevoir (520-524) une requête de connexion en provenance du cœur de navigation (410), l'établissement de la connexion sécurisée étant basé sur la requête de connexion, dans lequel la requête de connexion est basée sur le message d'initialisation reçu fourni au cœur de navigation (410).

6. Le modem (430) selon l'une des revendications 2 à 5, dans lequel la socket SUPL (460) est configurée pour fournir (514) le message d'initialisation reçu au cœur de navigation (410) via un ou plusieurs de ce qui suit : une interface de modèle d'interface à large bande mobile, MBIM, une interface d'appel de procédure à distance, et une interface de commande d'attention client (c-at).

7. Le modem (430) selon l'une des revendications 2 à 6, dans lequel le message d'initialisation est un message d'initialisation SUPL.

8. Le modem (430) selon l'une des revendications 1 à 7, dans lequel la socket SUPL (460) est en outre configurée pour :
recevoir des données d'assistance de position en provenance du serveur d'assistance de position (140) sur la base du message SUPL.

9. Le modem (430) selon la revendication 8, dans lequel la socket SUPL (460) est en outre configurée pour :
fournir (552) les données d'assistance de position reçues au cœur de navigation (410).

10. Le modem (430) selon l'une des revendications 1 à 9, dans lequel le serveur d'assistance de position (140) est un serveur SUPL qui stocke des données d'assistance de position.

11. Un procédé pour une communication sans fil d'un dispositif de communication (125) avec un ou plusieurs réseaux de communication sans fil, le dispositif de communication (125) incluant un cœur de navigation (410) et un modem (430), le cœur de navigation (410) destiné à faciliter des communications entre le modem et un système d'exploitation du dispositif de communication, le modem (430) comprenant une socket de localisation de plan utilisateur sécurisée, SUPL, (460),
le procédé comprenant :
l'établissement, par la socket SUPL (460), d'une connexion sécurisée avec un serveur d'assistance de position (140) ;
la fourniture, par la socket SUPL (460), d'un message SUPL du cœur de navigation (410) au serveur d'assistance de position (140) via la connexion sécurisée, le procédé **caractérisé par**
l'établissement d'un réseau de données par paquets, PDN, d'urgence, par une pile de sous-système multimédia en protocole Internet, IMS, (334, 434) comprise dans le modem (430), indépendamment du point de savoir si le dispositif de communication (125) inclut ou non une carte à circuit intégré universelle, UICC, valide ou une carte de module d'identité d'abonné, SIM, pour authentifier le dispositif de communication (125) sur lesdits un ou plusieurs réseaux sans fil,
le PDN d'urgence étant utilisé pour établir la connexion sécurisée avec le serveur d'assistance de position et pour fournir le message SUPL au serveur d'assistance de position (140).

12. Le procédé de communication selon la revendication 11, comprenant en outre :
la réception, par la socket SUPL (460), de données d'assistance de position en provenance du serveur d'assistance de position (140) sur la base du message SUPL.

13. Le procédé de communication selon la revendication 12, comprenant en outre :
la fourniture, par la socket SUPL (460), des données d'assistance de position reçues au cœur de navigation (410).

14. Un support de stockage lisible par ordinateur non transitoire comprenant des instructions qui, lorsqu'elles sont exécutées par un ordinateur, amènent l'ordinateur à mettre en œuvre le procédé selon l'une des revendications 11 à 13.
